# NEUE EUROPÄISCHE PATENTSCHRIFT

(11) **EP 1 695 808 B2**
(45) Veröffentlichungstag und Bekanntmachung des Hinweises auf die Entscheidung über den Einspruch: **06.03.2013**
(45) Hinweis auf die Patenterteilung: 08.10.2008
(21) Anmeldenummer: 06003616.7
(22) Anmeldetag: 22.02.2006
(51) Int. Cl.: B29C 45/16, B60R 13/04, B60R 13/02

(54) **Kraftfahrzeugzierteil**
Decorative article for vehicles
Objet décoratif pour véhicules

(30) Priorität: 24.02.2005 DE 102005008492; 04.08.2005 DE 102005036771
(43) Veröffentlichungstag der Anmeldung: 30.08.2006
(73) Patentinhaber: DURA Automotive Body and Glass Systems GmbH, 58840 Plettenberg (DE)
(72) Erfinder: Schulte, Marco, 57399 Kirchhundem (DE); Brandt, Olaf, 58809 Neuenrade (DE)
(74) Vertreter: Zinnecker, Armin

(56) Entgegenhaltungen:
- EP-A- 1 640 134
- WO-A-00/24421
- DE-A1- 10 314 055
- DE-A1- 19 610 687
- DE-A1- 19 722 551
- DE-C2- 19 730 095
- DE-T2- 60 102 845
- DE-U- 28 201 528
- JP-A- 10 086 765
- JP-A- 59 231 206

## Beschreibung

Die Erfindung betrifft ein Zierteil für ein Kraftfahrzeug. Insbesondere kann es sich bei dem Zierteil um eine Zierleiste oder ein sonstiges Verkleidungsteil handeln.

Ein derartiges Zierteil in Form einer Säulenblende ist aus der DE 202 01 528 U1 bekannt.

Ein Zierteil ist aus der DE 197 22 551 A1 bekannt.

Die WO 00/24421A offenbart ein Zierteil für ein Kraftfahrzeug, das in einem Mehrkomponenten-Spritzgußverfahren hergestellt ist. Insbesondere kann ein Zierteil hergestellt werden, das drei Schichten umfaßt, nämlich eine durchsichtige Schicht, eine Schicht mit lichtreflektierenden Partikeln und eine Schicht mit Farbpigment-Partikeln.

Aufgabe der Erfindung ist es, ein verbessertes Zierteil für ein Kraftfahrzeug vorzuschlagen.

Erfindungsgemäß wird diese Aufgabe durch die Merkmale des Anspruchs 1 gelöst. Das Zierteil umfaßt ein Trägerteil aus einem thermoplastischen Kunststoff mit einer hohen mechanischen Festigkeit und einer guten Schlagzähigkeit. Das Zierteil umfaßt ferner ein Deckteil aus einem thermoplastischen Kunststoff mit einer als Hochglanzfläche ausgebildeten Sichtfläche, das eine dekorative Funktion übernimmt. Bei dem Deckteil handelt es sich um ein Hochglanzteil. In bestimmten Anwendungsfällen kann es vorteilhaft sein, wenn das Deckteil über die dekorative Funktion hinaus noch eine oder mehrere weitere Funktionen übernimmt. Insbesondere ist das Deckteil vorzugsweise witterungsbeständig ausgestaltet.

Das Deckteil weist auf seiner demTrägerteil zugewandten Seite einen umlaufenden Rand auf, der im zusammengesetzten Zustand eine entsprechende Kontaktfläche des Trägerteils umschließt. An dem Trägerteil sind eine oder mehrere Dichtungen befestigbar oder befestigt, insbesondere angespritzt.

Das Trägerteil kann mechanische Funktionen übernehmen. Insbesondere kann das Trägerteil Funktionseigenschaften wie Kerbschlagzähigkeit, Bruchverhalten, Beständigkeit gegen Verdrehung, Befestigung des Zierteils, Befestigung von Anbauteilen (Dichtungen, Keder etc.), Schlagzähigkeit und/oder Beständigkeit gegen Bruch und Splitterneigung übernehmen.

Das Trägerteil besteht aus einem thermoplastischen Kunststoff. Geeignete Kunststoffe sind insbesondere ABS, ABS/PC und/oder ASA oder artverwandte Kunststoffe.

Das Deckteil besteht vorzugsweise aus PMMA oder PC.

Das Zierteil ist in einem Mehrkomponenten-Spritzgußverfahren hergestellt, insbesondere in einem Zweikomponenten-Spritzgußverfahren (2-K-Verfahren).

Das Zierteil kann eines oder mehrere weitere Teile umfassen. Die weiteren Teile bzw. Dichtungen sind vorzugsweise an das Zierteil angespritzt, vorzugsweise in einem Mehrkomponenten-Spritzgußverfahren (2- oder 3-K-Spritzgußverfahren).

In der Zeichnung zeigt
- Fig. 1: eine Zierleiste, bestehend aus einem Trägerteil und einem Deckteil, in einer perspektivischen Ansicht,
- Fig. 2: eine Blende in einer perspektivischen Ansicht vor dem Zusammenbau des Trägerteils und des Deckteils,
- Fig. 3: die Blende gemäß Fig. 2 nach dem Zusammenbau des Trägerteils und des Deckteils,
- Fig. 4: eine Abwandlung der Blende gemäß Fig. 2 und 3,
- Fig. 5: einen Querschnitt durch die Blende gemäß Fig. 4 und
- Fig. 6: eine Abwandlung der Blende gemäß Fig. 4 und 5 in einem Querschnitt.

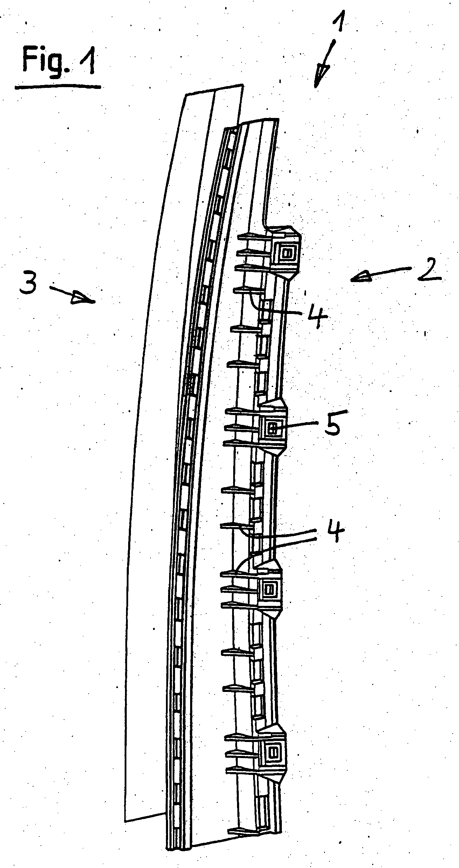

Die in Fig. 1 gezeigte Zierleiste 1 besteht aus einem Trägerteil 2 und einem Deckteil 3. Das Deckteil 3 ist aus PMMA oder aus PC hergestellt. Es hat auf seiner dem Trägerteil 2 abgewandten Seite eine Sichtfläche, die als Hochglanzfläche ausgebildet ist. Das Trägerteil 2 weist eine hohe mechanische Festigkeit auf. Es umfaßt Verstärkungsrippen 4 und Befestigungslöcher 5. Das Trägerteil 2 ist aus einem geeigneten Kunststoff hergestellt, beispielsweise ABS, ABS/PC oder ASA oder einem artverwandten Kunststoff.

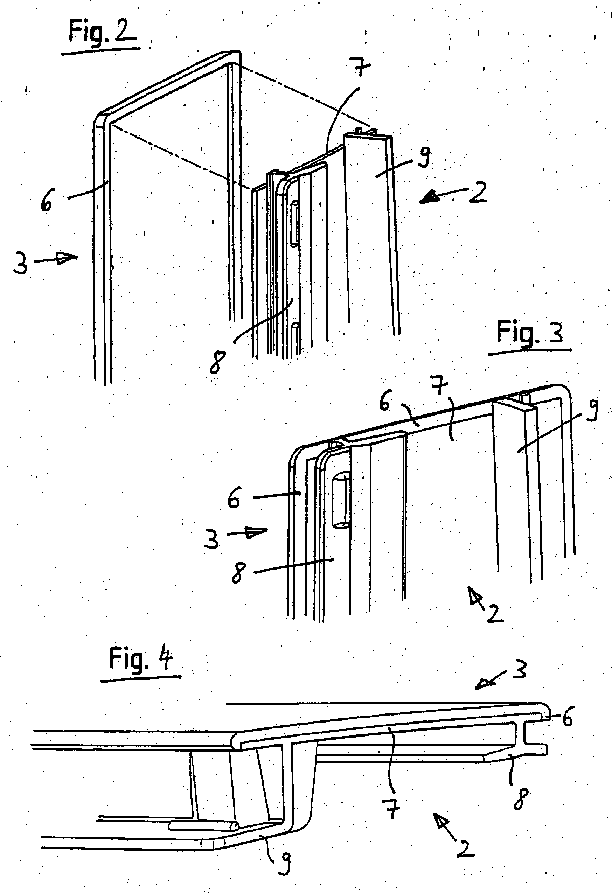

Die in Fig. 2 und 3 gezeigte Blende umfaßt ebenfalls ein Trägerteil 2 und ein Deckteil 3. Das Deckteil 3 weist auf seiner dem Trägerteil 2 zugewandten Seite einen umlaufenden Rand 6 auf, der im zusammengesetzten Zustand gemäß Fig. 3 eine entsprechende Kontaktfläche 7 des Trägerteils 2 umschließt. Auf der dem Deckteil 3 abgewandten Seite weist das Trägerteil 2 eine Profilleiste 8 auf, die einen im wesentlichen T-förmigen Querschnitt hat und die weitere Funktionen übernehmen kann, beispielsweise eine Befestigungsfunktion. Ferner weist das Trägerteil 2 eine weitere Profilleiste 9 mit einem im wesentlichen rechteckigen Profil auf. Diese weitere Profilleiste 9 kann weitere Funktionen übernehmen, insbesondere eine Befestigungsfunktion und/oder Abstandsfunktion. Die weitere Profilleiste 9 kann angrenzende Bauteile aufnehmen und/oder fixieren.

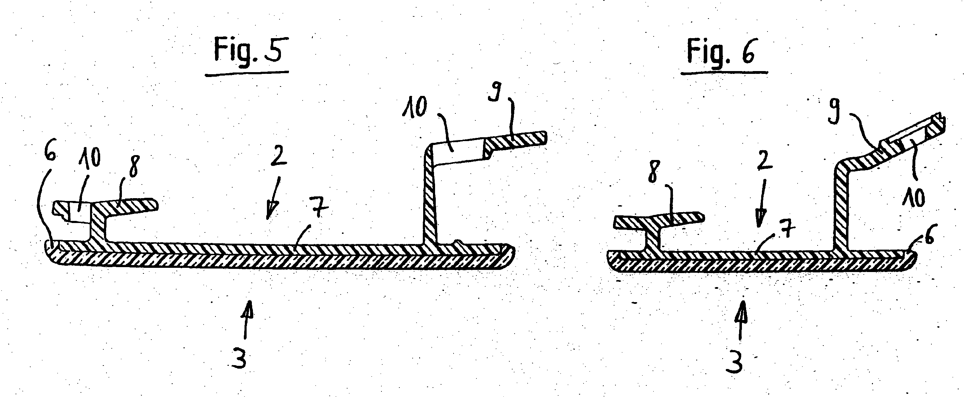

Bei der Erfindung gemäß Figur 4 und 5 ist die weitere Profilleiste 9 L-förmig ausgestaltet. Sowohl die Profilleiste 8 als auch die Profilleiste 9 weisen Durchgangsöffnungen 10 zur Befestigung an einem anderen Bauteil, insbesondere der Fahrzeugkarosserie oder einer Fahrzeugtüre, auf.

Bei der Abwandlung der Figur 6 ist der Schenkel des L-förmigen Profils 9 in einem Winkel von etwa 30° abgeknickt.

Die Erfindung ermöglicht den Einsatz von Kunststoff-Deckteilen, insbesondere PMMA-Deckteilen (Verkleidungsteilen) mit erhöhten Funktionseigenschaften bezüglich Bruchverhalten, Schlagzähigkeit etc. durch Zufügen von einem oder mehreren Trägerteilen, insbesondere aus Kunststoff. Die Trägerteile können als Trägerschicht ausgestaltet sein. Die Erfindung ermöglicht die Nutzung von Kunststoffen, die für die Sichtflächen von Zierteilen, insbesondere Hochglanz-Zierteilen, geeignet sind, insbesondere die Nutzung von PMMA. Die negativen Eigenschaften von PMMA wie schlechtes Bruchverhalten und schlechte Schlagzähigkeit werden durch die Verbindung des Deckteils mit einem Trägerteil egalisiert. Das Trägerteil kann aus einer oder mehreren Komponenten bestehen. Es kann als Trägerschicht ausgebildet sein. Insbesondere kann das Trägerteil im Zwei- oder Mehrkomponentenspritzguß hergestellt sein.

Zum Erreichen eines guten Bruchverhaltens und/oder einer guten Schlagzähigkeit können bei der Auswahl des Materials für das Trägerteil die Haftung, der Verzug und/oder die Toleranzeigenschaften berücksichtigt werden. Das Material des Trägerteils kann den konstruktiven und strukturmechanischen Anforderungen entsprechend in der Geometrie angepaßt werden. Der Werkstoff für das Deckteil bzw. die Deckschicht, insbesondere der PMMA-Werkstoff hierfür, dient nur dem Erreichen der dekorativen und/oder witterungsabhängigen Eigenschaften.

Im Vergleich zu vorbekannten 1-K-PMMA-Bauteilen übernimmt bei einem 2-K-Bauteil oder einem Mehr-K-Bauteil das PMMA nur die dekorative Funktion und/oder die Sicherstellung der Witterungsbeständigkeit. Die zusätzlichen Funktionseigenschaften wie Kerbschlagzähigkeit, Bruchverhalten, Beständigkeit gegen Verdrehung etc. werden durch die zweite Komponente, also das Trägerteil, erreicht. Darüber hinaus kann über den Einsatz der zweiten Komponente eine Kosteneinsparung ermöglicht werden. Das Trägerteil bzw. dessen Komponenten übernehmen die Funktionsanforderungen wie Befestigung des Teiles selbst, Befestigung von Anbauteilen (Dichtungen, Keder etc.), gute Schlagzähigkeit und/oder Beständigkeit gegen Bruch und Splitterneigung.

Bei den bisher bekannten Anwendungsfällen von Zierteilen für Kraftfahrzeuge, insbesondere von Fahrzeugverblendungen im Exterieurbereich finden ausschließlich 1-Komponenten-Systeme Anwendung, insbesondere aus den Werkstoffen Stahl, Aluminium oder Kunststoff. Diese Materialien weisen charakteristische Nachteile hinsichtlich der Kosten und/oder ihrer Eingenschaften im speziellen Anwendungsfall auf. Aufgrund der speziellen Anforderungen bei der Montage (Festigkeit, Torsionssteifigkeit) sowie der Belastungen im Alltagsgebrauch und Testanforderungen einzelner Automobilhersteller sowie der Erfordernisse zum Aufzeigen von Kosteneinsparungspotentialen können Einkomponentensysteme, insbesondere in Verbindung mit High Gloss Oberflächen, stellenweise nicht eingesetzt werden.

In diesen Fällen kann das erfindungsgemäße Mehrkomponentenkunststoffsystem eingesetzt werden. Der wesentliche Vorteil besteht darin, daß die Kombination von Kunststoffen mit verschiedenen Eigenschaften die Gesamtanforderungen des Kunden hinsichtlich der Herstellungskosten und sonstigen Eigenschaften erfüllen kann. Hierbei werden die Kunststoffe so gewählt, daß die positiven Eigenschaften in ihrer Gesamtheit die Anforderungen erfüllen. Zusätzlich können mit Hilfe der Mehrkomponententechnik auch weitere Funktionen wie Abdichtung etc. erfüllt werden, beispielsweise über da Anspritzen einer Dicht- und /oder Dämpfungslippe.

Im Vergleich zu einem Einkomponenten-Kunststoff-System weisen Mehrkomponentensysteme (insbesondere bestehend aus High Gloss Deckschicht aus einem thermoplastischen Kunststoff und einem Funktionsträgermaterial aus einem thermoplastischen Kunststoff, welcher je nach Anforderungen eine Verbindung mit der Deckschicht eingeht), die mittels 2-Komponenten-Spritzguß hergestellt werden, folgende Vorteile auf: Wesentlich besseres Bruchverhalten/kein Splitterbruch; geringere Materialkosten; keine Einfallstellen/besseres Oberflächenerscheinungsbild; wesentlich größere Designfreiheiten, weil alle Funktionsbereiche durch den mechanisch besseren Werkstoff abgebildet werden; sehr gute Haftung der beiden Komponenten; geringer Verzug und Schwindung.

Als Material für das Deckteil ist insbesondere PMMA geeignet. Dieses Material kann in verschiedenen Farben hergestellt sein, insbesondere in schwarz. Es kann auch als transparentes Material hergestellt sein. Ferner sind insbesondere die Materialien ABS, ABS/PC, ASA oder artverwandte Kunststoffe geeignet. Die Wandstärke im Verhältnis zum Fließweg beträgt bei PMMA etwa 1 mm zu 210 mm. Bei einem Träger aus ABS, ABS/PC, ASA können die Wandstärken der Funktionsbereiche im Bereich von 0,5 bis 5 mm, vorzugsweise im Bereich von 2,0 bis 2,5 mm liegen und im Bereich der Kontaktflächen zum PMMA ebenfalls im Bereich von 0,5 bis 5 mm liegen. Die endgültige Oberflächenhärte/Kratzfestigkeit ist 72 Stunden nach der Verarbeitung gegeben.

## Patentansprüche

1. Zierteil für ein Kraftfahrzeug
mit einem Trägerteil (2) aus einem thermoplastischen Kunststoff mit einer hohen mechanischen Festigkeit und einer guten Schlagzähigkeit
und einem Deckteil (3) aus einem thermoplastischen Kunststoff mit einer als Hochglanzfläche ausgebildeten Sichtfläche,
wobei das Deckteil (3) auf seiner dem Trägerteil (2) zugewandten Seite einen umlaufenden Rand (6) aufweist, der im zusammengesetzten Zustand eine entsprechende Kontaktfläche (7) des Trägerteils (2) umschließt,
an dem Trägerteil (2) eine oder mehrere Dichtungen befestigbar oder befestigt, insbesondere angespritzt, sind,
das Trägerteil (2) auf der dem Deckteil (3) abgewandten Seite eine Profilleiste (8) mit einem T-förmigen Querschnitt und eine weitere Profilleiste (9) mit einem L-förmigen Profil aufweist,
sowohl die Profilleiste (8) mit einem T-förmigen Querschnitt als auch die Profilleiste (9) mit einem L-förmigen Profil Durchgangsöffnungen (10) zur Befestigung an einem anderen Bauteil aufweisen und
das Zierteil im Mehrkomponenten-Spritzgußverfahren hergestellt ist.

## Claims

1. Trim section for a motor vehicle,
having a support section (2) made from a thermoplastic synthetic material with high mechanical stability and good impact resistance,
and having a covering section (3) made from a thermoplastic synthetic material with a visible surface designed as a high-polish surface,
wherein the covering section (3) has an encapsulating edge (6) on its side facing the support section (2), which encloses a corresponding contact surface (7) of the support section (2) when in an assembled state,
one or more seals are attachable or attached to, in particular injected into, the support section (2),
the support section (2) has, on the side facing away from the covering section (3), a sectional strip (8) having a T-shaped cross-section and a further sectional strip (9) having an L-shaped profile,
both the sectional strip (8) having a T-shaped cross-section and the sectional strip (9) having an L-shaped profile have through-holes (10) for attaching them to another component, and
the trim section is produced in the multi-component die casting method.

## Revendications

1. Objet décoratif pour un véhicule
avec une partie de support (2) en matériau synthétique thermoplastique avec une solidité mécanique élevée et une bonne résilience
et une partie de recouvrement (3) en un matériau synthétique thermoplastique avec une face de vision réalisée sous forme de face à polissage spéculaire,
où la partie de recouvrement (3) présente sur son côté orienté vers la partie de support (2) un bord (6) s'étendant tout autour qui, à l'état assemblé, entoure une face de contact correspondante (7) de la partie de support (2),
où sont fixés, en particulier rapportés par injection, à la partie de support (2), un ou plusieurs joints,
où la partie de support (2) présente sur le côté éloigné de la partie de couvercle (3) une baguette profilée (8) avec une section transversale en forme de T et une autre baguette profilée (9) avec un profil en forme de L,
où, aussi bien la baguette profilée (8) avec une section transversale en forme de T que la baguette profilée (9) avec un profil en forme de L comprennent des ouvertures de passage(10) pour la fixation à une autre pièce et
où l'objet décoratif est réalisé selon le procédé de moulage par injection à plusieurs composants.
